# EUROPÄISCHE PATENTSCHRIFT

(11) **EP 1 397 029 B1**
(45) Veröffentlichungstag und Bekanntmachung des Hinweises auf die Patenterteilung: **11.10.2006**
(21) Anmeldenummer: 03017860.2
(22) Anmeldetag: 05.08.2003
(51) Int. Cl.: H05B 41/282, H05B 41/285

(54) **Schaltungsanordnung zum Betrieb von Entladungslampen**
Circuit for operating a discharge lamp
Circuit pour opérer une lampe de décharge

(30) Priorität: 04.09.2002 DE 10241327
(43) Veröffentlichungstag der Anmeldung: 10.03.2004
(73) Patentinhaber: Patent-Treuhand-Gesellschaft für elektrische Glühlampen mbH, 81543 München (DE)
(72) Erfinder: Mayer, Siegfried, 85452 Moosinning (DE); Storm, Arwed, 85221 Dachau (DE)

(56) Entgegenhaltungen:
- EP-A- 1 235 468
- US-A- 5 471 117
- US-A- 5 568 041
- US-A- 5 569 984
- US-A- 5 598 326
- US-A1- 2002 014 861
- US-B1- 6 172 466
- US-B1- 6 359 394

## Beschreibung

### Technisches Gebiet

Die Erfindung geht aus von einer Schaltungsanordnung zum Betrieb von Entladungslampen, im folgenden kurz Schaltungsanordnung genannt, gemäß dem Oberbegriff des Anspruchs 1. Es handelt sich dabei insbesondere um Schaltungsanordnungen, die eine Leistungsfaktor-Korrektur-Einrichtung und einen Wechselrichter enthalten. Die Erfindung behandelt die Kopplung von Leistungsfaktor-Korrektur-Einrichtung und Wechselrichter.

### Stand der Technik

Elektronische Betriebsgeräte für Entladungslampen, die an einer Netzspannung betrieben werden, dürfen nur einen Netzstrom beziehen, der einschlägigen Normen genügt. Beispielsweise setzt die Norm IEC 61000-3-2 Grenzen für die Amplituden der Oberschwingungen des Netzstroms. Verbreitet sind elektronische Betriebsgeräte, die Schaltungsanordnungen mit einer separaten Leistungsfaktor-Korrektur-Einrichtung enthalten, damit sie die Normen für den Netzstrom einhalten.

Die Leistungsfaktor-Korrektur-Einrichtung erzeugt eine Zwischenkreisspannung, die einen Wechselrichter mit Energie versorgt. Der Wechselrichter erzeugt eine hochfrequente Wechselspannung, die Energie an die Entladungslampen liefert. Hochfrequent sind in diesem Zusammenhang Wechselspannungen mit einer Frequenz, die wesentlich höher ist als eine Frequenz der Netzspannung.

Die Leistungsfaktor-Korrektur-Einrichtung und der Wechselrichter enthalten elektronische Schalter, die ein- und ausgeschaltet werden. Dadurch entsteht eine Oszillation der Leistungsfaktor-Korrektur-Einrichtung und des Wechselrichters, wobei die Leistungsfaktor-Korrektur-Einrichtung mit einem PFC-Takt oszilliert und der Wechselrichter mit einem Wechselrichter-Takt oszilliert.

Die Oszillationen der Leistungsfaktor-Korrektur-Einrichtung und des Wechselrichters müssen gezielt gestartet werden: Ein Problem taucht bei der Inbetriebnahme der Schaltungsanordnung auf. Bei der Inbetriebnahme der Schaltungsanordnung lädt die Netzspannung einen Speicherkondensator auf den Spitzenwert der Netzspannung. Dabei treten hohe Werte für den Netzstrom auf, die Störungen in der Leistungsfaktor-Korrektur-Einrichtung verursachen können. Deshalb ist es wichtig, die Oszillation der Leistungsfaktor-Korrektur-Einrichtung erst dann zu starten, wenn der Ladevorgang des Speicherkondensators bei der Inbetriebnahme der Schaltungsanordnung abgeschlossen ist.

Nach dem Start der Oszillation der Leistungsfaktor-Korrektur-Einrichtung stellt sich am Speicherkondensator ein geregelter Wert für die Zwischenkreisspannung. Überschreitet der Wert der Zwischenkreisspannung trotz der Regelung einen vorgegebene Überspannungsschwelle, muss eine Überspannungsabschaltung erfolgen. Während der Überspannungsabschaltung wird die Oszillation der Leistungsfaktor-Korrektur-Einrichtung ausgesetzt, um Bauelemente der Schaltungsanordnung vor einer Überspannung zu schützen.

Ein weiteres Problem taucht in einem Fehlerfall auf. Ein Fehlerfall kann dann vorliegen, wenn die Entladungslampe ihr Lebensdauerende erreicht hat, defekt ist, oder nicht vorhanden ist. Auch der Versuch eine für die Schaltungsanordnung ungeeignete Lampe zu betreiben kann einen Fehlerfall bedeuten. In einem Fehlerfall muss eine Fehlerabschaltung erfolgen, die die Oszillation des Wechselrichters anhält. Durch die Fehlerabschaltung werden Bauelemente der Schaltungsanordnung vor einer Überlastung geschützt.

Ist eine Fehlerabschaltung erfolgt, so bezieht der Wechselrichter keine Energie mehr von der Leistungsfaktor-Korrektur-Einrichtung. Es ist vorteilhaft, dass bei einer Fehlerabschaltung auch die Oszillation der Leistungsfaktor-Korrektur-Einrichtung angehalten wird. Damit wird das gesamte Betriebsgerät in einen Abschaltmodus versetzt, der keine Energie aus der Netzspannung bezieht und eine minimale Belastung von Bauelementen aufweist.

Bekannt sind Schaltungsanordnungen, die Steuerschaltkreise enthalten, die die Oszillation von Leistungsfaktor-Korrektur-Einrichtungen und Wechselrichtern steuern. Diese Steuerschaltkreise machen die Schaltungsanordnungen aufwändig und erhöhen damit deren Kosten.

### Darstellung der Erfindung

Es ist Aufgabe der vorliegenden Erfindung, eine Schaltungsanordnung gemäß dem Oberbegriff des Anspruchs 1 bereitzustellen, das eine Steuerung der Oszillation der Leistungsfaktor-Korrektur-Einrichtung und des Wechselrichters kostengünstig bewerkstelligt.

Diese Aufgabe wird durch eine Schaltungsanordnung mit den Merkmalen des Oberbegriffs des Anspruchs 1 durch die Merkmale des kennzeichnenden Teils des Anspruchs 1 gelöst. Besonders vorteilhafte Ausgestaltungen sind in den abhängigen Ansprüchen dargestellt.

Ausgangspunkt der Erfindung ist eine Schaltungsanordnung, die keinen Steuerkreis enthält, der die Oszillation der Leistungsfaktor-Korrektur-Einrichtung und des Wechselrichters steuert. Vielmehr können Leistungsfaktor-Korrektur-Einrichtung und Wechselrichter unabhängig voneinander oszillieren. Erfindungsgemäß wird die Oszillation der Leistungsfaktor-Korrektur-Einrichtung über eine Starteinrichtung von einer Oszillation des Wechselrichters gestartet.

Bei der Inbetriebnahme der Schaltungsanordnung startet die Oszillation der Leistungsfaktor-Korrektur-Einrichtung nicht selbsttätig. Erst wenn die Oszillation des Wechselrichters einsetzt, wird die Oszillation der Leistungsfaktor-Korrektur-Einrichtung über die Starteinrichtung gestartet. Da die Oszillation des Wechselrichters erst einsetzen kann, wenn der Ladevorgang des Speicherkondensators weitgehend abgeschlossen ist, weil erst dann eine Zwischenkreisspannung zur Verfügung steht, treten keine Probleme durch hohe Werte des Netzstroms bei der Inbetriebnahme der Schaltungsanordnung auf.

Vorteilhaft enthält die Leistungsfaktor-Korrektur-Einrichtung eine Überspannungsabschaltung, die bei überschreiten einer vorgegebenen Überspannungsschwelle durch die Zwischenkreisspannung die Oszillation der Leistungsfaktor-Korrektur-Einrichtung anhält.

Vorteilhaft arbeitet die Überspannungsabschaltung monostabil. Dies bedeutet, dass nach einem Ansprechen der Überspannungsabschaltung die Oszillation der Leistungsfaktor-Korrektur-Einrichtung für eine gegebene Abschaltzeit anhält. Nach Ablauf der Abschaltzeit, wird die Überspannungsabschaltung wieder inaktiv und die Oszillation Leistungsfaktor-Korrektur-Einrichtung kann über die Starteinrichtung wieder gestartet werden. Die Dauer der Abschaltzeit richtet sich in erster Linie nach dem Abklingverhalten der Oszillation der Leistungsfaktor-Korrektur-Einrichtung. Es muss sicher gestellt sein, dass die Abschaltzeit so lange dauert, bis die Oszillation der Leistungsfaktor-Korrektur-Einrichtung abgeklungen ist. In der Praxis ergibt sich ein Wert für die Abschaltzeit von mindestens 100 Mikrosekunden.

Vorteilhaft enthält der Wechselrichter eine Fehlerabschaltung, die im Fehlerfall die Oszillation des Wechselrichter anhält.

Vorteilhaft arbeitet die Fehlerabschaltung bistabil und die Überspannungsabschaltung monostabil. Dadurch beeinflussen sich die Oszillation der Leistungsfaktor-Korrektur-Einrichtung und des Wechselrichters wie folgt: Spricht die Überspannungsabschaltung an, ohne Vorliegen eines Fehlerfalls, so wird zwar die Oszillation der Leistungsfaktor-Korrektur-Einrichtung angehalten, der Wechselrichter arbeitet jedoch weiter und betreibt die Entladungslampen. Nach der Abschaltzeit wird die Leistungsfaktor-Korrektur-Einrichtung wieder gestartet. Liegt ein Fehlerfall vor, so wird die Oszillation des Wechselrichters dauerhaft angehalten. Da nun von der Leistungsfaktor-Korrektur-Einrichtung keine Energie mehr bezogen wird, steigt Zwischenkreisspannung an, bis die Überspannungsabschaltung anspricht. Auch nach Ablauf der Abschaltzeit wird in diesem Fall die Oszillation der Leistungsfaktor-Korrektur-Einrichtung nicht mehr gestartet, da aufgrund der Fehlerabschaltung die Oszillation des Wechselrichters angehalten ist. Damit geht die Schaltungsanordnung im Fehlerfall erfindungsgemäß in einen Abschaltmodus, ohne einen aufwändigen Steuerschaltkreis.

Aus Kostengründen ist es vorteilhaft, die Leistungsfaktor-Korrektur-Einrichtung als selbstschwingenden Hochsetzer mit einem Hochsetzerschalter, einer Hochsetzerdrossel und einer Hochsetzerdiode auszuführen. Ein derartiger Hochsetzer ist in der deutschen Patentanmeldung mit dem amtlichen Aktenzeichen 10205516.5 vom 8. Februar 2002 beschrieben. Bei diesem Hochsetzer bildet die Spannung am Hochsetzerschalter eine Rückkoppelgröße. Damit wird eine prinzipiell schwingfähige Rückkoppelschleife geschlossen. Erfindungsgemäß ist der Hochsetzer jedoch so dimensioniert, dass er nicht selbsttätig eine Oszillation startet.

Erst durch die Oszillation des Wechselrichters startet über eine Starteinrichtung der Hochsetzer. Erfindungsgemäß ist die Starteinrichtung durch einen Triggerkondensator realisiert, der die Oszillation des Wechselrichters der Rückkoppelgröße überlagert. Die Oszillation des Wechselrichters löst somit eine erste Schwingung des Hochsetzers aus, der daraufhin selbsttätig weiterschwingt. Der Wert der Rückkoppelgröße ist bei laufender Oszillation so groß, dass die Starteinrichtung keinen Einfluss darauf ausüben kann.

Aus Kostengründen ist es vorteilhaft den Wechselrichter als Halbbrückenwechselrichter auszuführen. Besonders kostengünstig sind bekannte selbstschwingende Halbbrückenwechselrichter.

Ein Halbbrückenwechselrichter stellt eine hochfrequente Wechselspannung an seinem Ausgang zur Verfügung. Die Verbindungsstelle der beiden Halbbrückenschalter des Halbbrückenwechselrichters bilden seinen Ausgang. Dort kann die Oszillation des Wechselrichters für die Starteinrichtung abgegriffen werden.

Ein erster Anschluss des Triggerkondensators ist demnach mit der Verbindungsstelle der beiden Halbbrückenschalter gekoppelt. Bei Verwendung eines selbstschwingenden Hochsetzers ist ein zweiter Anschluss des Triggerkondensators erfindungsgemäß mit der Rückkoppelgröße des selbstschwingenden Hochsetzers gekoppelt, damit eine Oszillation des Hochsetzers angestoßen wird. Deshalb wird der zweite Anschluss des Triggerkondensators erfindungsgemäß mit dem Verbindungspunkt Hochsetzerdrossel und der Hochsetzerdiode gekoppelt.

### Kurze Beschreibung der Zeichnungen

Im folgenden wird die Erfindung anhand von Ausführungsbeispielen unter Bezugnahme auf Zeichnungen näher erläutert. Es zeigen:
- Figur 1: ein Blockschaltbild einer erfindungsgemäßen Schaltungsanordnung,
- Figur 2: den Schaltplan eines Ausführungsbeispiels einer erfindungsgemäßen Schaltungsanordnung,
- Figur 3: den Schaltplan eines weiteren Ausführungsbeispiels einer erfindungsgemäßen Schaltungsanordnung.

Im folgenden werden Widerstände durch den Buchstaben R, Transistoren durch den Buchstaben T, Dioden durch den Buchstaben D, Verbindungsstellen durch den Buchstaben J, Kondensatoren durch den Buchstaben C, Induktivitäten durch den Buchstaben L jeweils gefolgt von einer Zahl bezeichnet. Auch werden im folgenden für gleiche und gleichwirkende Elemente der verschiedenen Ausführungsbeispiele durchweg gleiche Bezugszeichen verwendet.

### Bevorzugte Ausführung der Erfindung

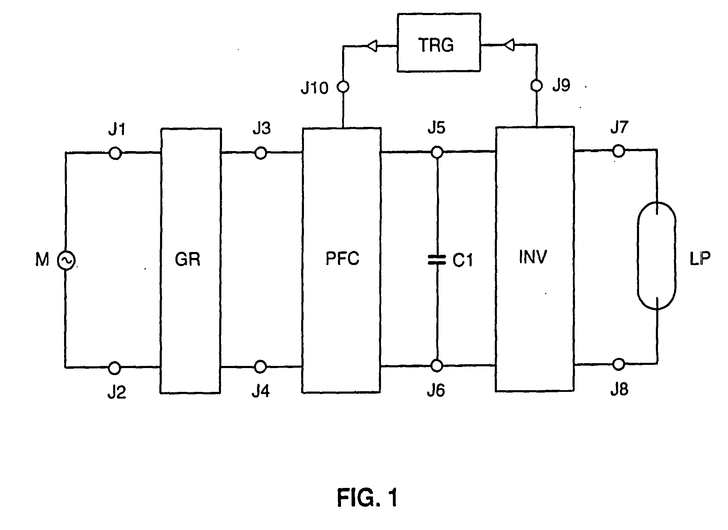

In Figur 1 ist ein Blockschaltbild einer erfindungsgemäßen Schaltungsanordnung dargestellt. Eine Netzspannungsquelle M speist über die Verbindungsstellen J1 und J2 eine Netzspannung in einen Block GR ein. Der Block GR enthält einen Gleichrichter und kann Mittel zur Filterung von Funkstörungen enthalten.

An den Verbindungsstellen J3 und J4 stellt der Block GR eine gleichgerichtete Netzspannung zur Verfügung. Sie speist den Block PFC. Der Block PFC enthält eine Leistungsfaktor-Korrektur-Einrichtung. Dabei kann es sich um eine beliebige, aus der Literatur bekannte Topologie handeln. Beispielsweise kann eine Hochsetzer-, Tiefsetzer- oder SEPIC-Topologie verwendet werden. Wichtig für die Erfindung ist, dass die Leistungsfaktor-Korrektur-Einrichtung nicht selbsttätig bei Anlegen einer Netzspannung an J4 und J4 zu oszillieren beginnt. Erfindungsgemäß weist der Block PFC eine Verbindungsstelle J10 auf. Über J10 wird die Oszillation der Leistungsfaktor-Korrektur-Einrichtung gestartet. Nach dem Start kann die Leistungsfaktor-Korrektur-Einrichtung selbsttätig oszillieren. Ein Startsignal muss an J10 nicht permanent anliegen.

Über die Verbindungsstellen J5 und J6 stellt der Block PFC an einem Speicherkondensator C1 eine Zwischenkreisspannung zur Verfügung. Die Zwischenkreisspannung liefert Energie für einen Block INV. Dieser enthält einen Wechselrichter, der die von der Zwischenkreisspannung entnommene Energie in eine Form umwandelt, wie sie zum Betrieb einer oder mehrerer Entladungslampen LP benötigt wird. Über die Verbindungsstellen J7 und J8 ist eine Entladungslampe LP an den Block INV angeschlossen. Die Entladungslampe LP steht stellvertretend für Hoch- und Niederdruckentladungslampen. Auch können mehrere Lampen in Serie oder parallel an J7 und J8 angeschlossen sein. Bei Niederdruckentladungslampen mit beheizbaren Elektrodenwendeln können auch noch weitere Anschlüsse für die Lampen vorgesehen sein.

Wichtig für die Erfindung ist, dass der Block INV eine Verbindungsstelle J9 besitzt, an der erkennbar ist, wann der Wechselrichter im Block INV oszilliert. Beispielsweise kann ein Logiksignal eines Oszillatorbausteins über J9 ausgegeben werden. Im einfachsten Fall wird an J9 die Oszillation des Wechselrichters selbst an J9 angelegt.

Erfindungsgemäß wird das Signal an J9 einem ersten Anschluss einer Starteinrichtung TRG zugeführt. Ein zweiter Anschluss der Starteinrichtung TRG ist mit der Verbindungsstelle J10 verbunden, über die eine Oszillation der Leistungsfaktor-Korrektur-Einrichtung gestartet werden kann. In Figur 1 deuten Pfeile die Wirkungsrichtung der Starteinrichtung von J9 nach J10 an.

Im einfachsten Fall besteht die Starteinrichtung lediglich aus einer elektrischen Verbindungsleitung. Dies ist nur dann möglich wenn der Block INV an J9 ein Signal liefert, das direkt geeignet ist, eine Oszillation der Leistungsfaktor-Korrektur-Einrichtung zu starten. In den meisten Anwendungsfällen muss jedoch die Starteinrichtung das Signal an J9 anpassen, damit über J10 ein erfindungsgemäßer Start der Oszillation der Leistungsfaktor-Korrektur-Einrichtung erfolgt. Das kann bedeuten, dass das Signal an J9 verstärkt, abgeschwächt oder gefiltert werden muss. Das Signal an J10 muss so stark sein, dass ein Start der Oszillation der Leistungsfaktor-Korrektur-Einrichtung erfolgen kann. Es darf nicht so stark sein, dass es die gestartete Oszillation beeinflusst. Und es muss ausgeschlossen sein, dass ein Start erfolgt, der dem erfinderischen Gedanken widerspricht.

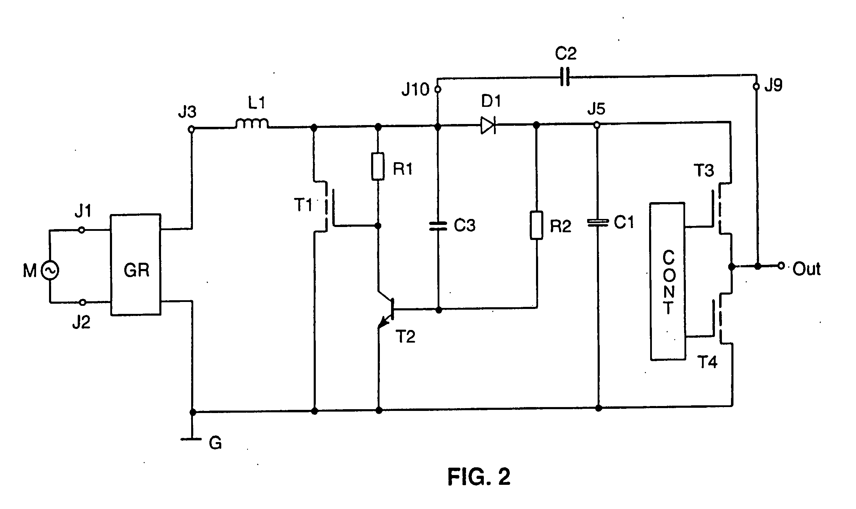

In Figur 2 ist ein Schaltplan eines Ausführungsbeispiels einer erfindungsgemäßen Schaltungsanordnung dargestellt. Im Vergleich zu Figur 1 sind die Verbindungsstellen J4 und J6 zu einem Massepotenzial G zusammengefasst. An J3 liefert der Block GR eine gleichgerichtete Netzspannung bezüglich dem Massepotenzial G.

Eine Induktivität L1, Transistoren T1 und T2, Widerstände R1 und R2, ein Kondensator C3 und eine Diode D1 bilden einen selbstschwingenden Hochsetzer wie er in der deutschen Patentanmeldung mit dem amtlichen Aktenzeichen 10205516.5 vom 8. Februar 2002 beschrieben wird. Dabei bildet T1 den Hochsetzerschalter, L1 die Hochsetzerdrossel und D1 die Hochsetzerdiode.

Ein erster Anschluss von L1 ist mit J3 verbunden. Ein zweiter Anschluss von L1 ist mit der Verbindungsstelle J10 verbunden, die einen Starteingang des Hochsetzers bildet. T1 ist als MOSFET ausgeführt, dessen Kanal zwischen J10 und dem Massepotenzial G geschaltet ist. Das Gate von T1 ist über den Widerstand R 1 mit J10 verbunden. Das Gate ist auch mit dem Kollektor des Transistors T2 verbunden, der als Bipolartransistor ausgeführt ist. Der Emitter von T2 ist mit dem Massepotenzial G verbunden. Die Basis von T2 ist über den Kondensator C3 mit J10 verbunden. Die Basis von T2 ist über den Widerstand R2 auch mit einem Verbindungspunkt J5 verbunden. Zwischen J5 und dem Massepotenzial G ist ein Speicherkondensator C1 geschaltet. An J5 liegt somit bezogen auf das Massepotenzial G eine Zwischenkreisspannung an. Die Diode D1 ist mit ihrer Anode mit J10 und mit Ihrer Katode mit J5 verbunden.

An die Zwischenkreisspannung ist die Serienschaltung zweier Halbbrückentransistoren T3 und T4 geschaltet. Die Gateanschlüsse von T3 und T4 werden von einem Block CONT angesteuert. Der Block CONT kann einen Hochfrequenzoszillator enthalten, der T3 und T4 abwechselnd ein- und ausschaltet. Es ist auch möglich, dass der Block CONT ein Halbbrückenrückkoppelsignal empfängt und abhängig davon die Transistoren T3 und T4 abwechselnd ein- und ausschaltet. In diesem Fall wird mit dem Block CONT, T3 und T4 ein selbstschwingender Halbbrücken-Wechselrichter aufgebaut.

Am Verbindungspunkt Out von T3 und T4 liegt bei oszillierendem Halbbrücken-Wechselrichter eine hochfrequente Wechselspannung gegenüber dem Massepotenzial G an. Diese liefert über nicht dargestellte bekannte Lampen-Schaltkreise Energie für eine Entladungslampe LP.

Der Verbindungspunkt Out ist mit dem Verbindungspunkt J9 verbunden. An J9 liegt somit die Oszillation des Halbbrücken-Wechselrichters in Form einer hochfrequente Wechselspannung an. J9 ist über einen Triggerkondensator C2 mit J10 verbunden. Der Vergleich mit Figur 1 zeigt, dass die Starteinrichtung im Anwendungsbeispiel in Figur 2 durch den Triggerkondensator C2 realisiert wird.

Bei der Inbetriebnahme der Schaltungsanordnung wird T2 zunächst über C3, nach dem Aufbau der Zwischenkreisspannung auch über R2 angesteuert. Damit wird über T2 das Gate von T1 mit dem Massepotenzial G verbunden. Eine Oszillation des selbstschwingenden Hochsetzers wird somit nicht gestartet. Wenn der Ladevorgang des Speicherkondensators weitgehend abgeschlossen ist, erreicht die Zwischenkreisspannung einen Wert, der eine Oszillation des Halbbrücken-Wechselrichters ermöglicht. Diese Oszillation reduziert über die Kondensatoren C2 und C3 die Basis-Emitter-Spannung von T2. T2 schaltet ab und T1 kann über R1 eingeschaltet werden.

Damit ist die selbsttätige Oszillation der Leistungsfaktor-Korrektur-Einrichtung gestartet. Die Amplitude der Spannungsschwankung an J10 ist nach dem ersten Einschalten von T1 so groß, dass über die Rückwirkung durch C3 eine selbsttätige Oszillation der Leistungsfaktor-Korrektur-Einrichtung erhalten bleibt. Auch ist die Amplitude der Spannungsschwankung an J10 bei oszillierender Leistungsfaktor-Korrektur-Einrichtung so groß, dass die über C2 auf J10 eingekoppelte Spannung vernachlässigbar ist.

Erfindungsgemäß setzt die Oszillation der Leistungsfaktor-Korrektur-Einrichtung erst ein, nachdem der Ladevorgang des Speicherkondensators bei der Inbetriebnahme der Schaltungsanordnung weitgehend abgeschlossen ist. Oben beschriebene Probleme mit durch hohe Ladeströme werden dadurch vermieden.

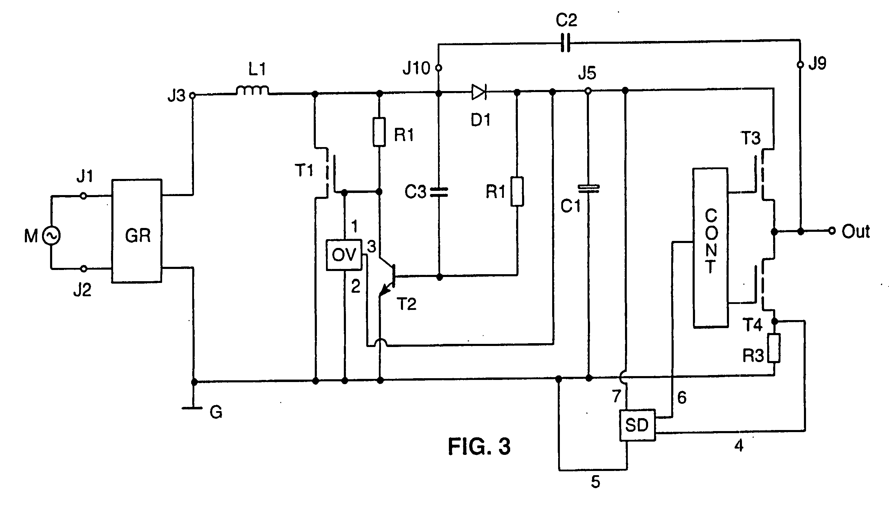

In Figur 3 ist der Schaltplan eines weiteren Ausführungsbeispiels einer erfindungsgemäßen Schaltungsanordnung dargestellt. Im Vergleich zu Figur 2 ist der Schaltplan in Figur 3 um eine Überspannungsabschaltung OV und eine Fehlerabschaltung SD erweitert.

Die Überspannungsabschaltung OV erfasst mit ihren Anschlüssen 3 und 2 die Zwischenkreisspannung. Der Anschluss 1 ist mit dem Gate von T1 verbunden. Überschreitet die Zwischenkreisspannung einen vorgegebenen Überspannungsschwelle, wird das Gate von T1 über die Anschlüsse 1 und 2 mit dem Massepotenzial G verbunden. Damit wird die Oszillation der Leistungsfaktor-Korrektur-Einrichtung angehalten.

Erfindungsgemäß Verbindung zwischen dem Gate von T1 und dem Massepotenzial G durch die Überspannungsabschaltung OV nach einer Abschaltzeit wieder aufgehoben. Falls nach der Abschaltzeit der Halbbrücken-Wechselrichter oszilliert, startet er über C2 die Oszillation der Leistungsfaktor-Korrektur-Einrichtung wieder.

Unterschiedlich zu Figur 2, ist in Figur 3 der Halbbrückentransistor T4 über einen Messwiderstand R3 mit dem Massepotenzial G verbunden. Der Spannungsabfall an R3 ist ein Maß für den Strom in der Halbbrücke. Wie aus der Literatur bekannt können daraus Fehlerfälle abgeleitet werden. Dies geschieht auch in der Fehlerabschaltung SD über den Anschluss 4. Es ist auch möglich aus der Spannung über der Entladungslampe Fehlerfälle abzuleiten. Dazu muss diese Spannung der Fehlerabschaltung SD zugeführt werden.

Erkennt die Fehlerabschaltung SD einen Fehlerfall, so unterbricht sie über den Anschluss 6 die Oszillation des Halbbrücken-Wechselrichters. Erfindungsgemäß unterbricht die Fehlerabschaltung SD die Oszillation des Halbbrücken-Wechselrichters dauerhaft. Erst ein Einfluss von außen kann die Oszillation des Halbbrücken-Wechselrichters wieder freigeben. Dies kann beispielsweise durch eine Unterbrechung der Netzspannung erfolgen. Dazu ist die Fehlerabschaltung SD über die Anschlüsse 5 und 7 mit der Zwischenkreisspannung verbunden. Die Anschlüsse 5 und 7 können auch zur Betriebsspannungsversorgung der Fehlerabschaltung SD dienen. Durch eine Unterbrechung der Netzspannung sinkt die Zwischenkreisspannung ab und setzt die Fehlerabschaltung SD zurück. Beim erneuten ansteigen der Zwischenkreisspannung kann die Oszillation des Halbbrücken-Wechselrichters wieder beginnen.

Es können auch Mittel vorgesehen sein, die eine erneute Oszillation des Halbbrücken-Wechselrichters nach einem Lampenwechsel ermöglichen.

Die dauerhafte Unterbrechung der Oszillation des Halbbrücken-Wechselrichters führt im dargestellten Ausführungsbeispiel zu stetigem Anstieg der Zwischenkreisspannung. Schließlich überschreitet der Wert der Zwischenkreisspannung die Überspannungsschwelle. Daraufhin hält die Überspannungsabschaltung die Oszillation der Leistungsfaktor-Korrektur-Einrichtung an. Sie wird auch nach Ablauf der Abschaltzeit nicht mehr gestartet, falls der Halbbrücken-Wechselrichter nicht wieder oszilliert. Damit befindet sich die Schaltungsanordnung in einem Abschaltmodus.

## Patentansprüche

1. Schaltungsanordnung zum Betrieb von Entladungslampen mit folgenden Merkmalen:
• mit einem PFC-Takt oszillierende Leistungsfaktor-Korrektur-Einrichtung (PFC), die eine Zwischenkreisspannung bereit stellt,
• mit einem vom PFC-Takt unabhängigen Wechselrichter-Takt oszillierender Wechselrichter (INV), der seine Energie aus der Zwischenkreisspannung bezieht und Energie an Entladungslampen (LP) abgeben kann,
**dadurch gekennzeichnet, dass** eine Oszillation der Leistungsfaktor-Korrektur-Einrichtung (PFC) über eine Starteinrichtung (TRG) von einer Oszillation des Wechselrichters (INV) gestartet wird.

2. Schaltungsanordnung gemäß Anspruch 1, **gekennzeichnet durch** eine Überspannungsabschaltung (OV), die bei überschreiten einer vorgegebenen Überspannungsschwelle **durch** die Zwischenkreisspannung die Oszillation der Leistungsfaktor-Korrektur-Einrichtung (PFC) anhält.

3. Schaltungsanordnung gemäß Anspruch 2, **gekennzeichnet durch** eine Fehlerabschaltung (SD), die im Fchlerfall die Oszillation des Wechselrichter anhält.

4. Schaltungsanordnung gemäß Anspruch 2, **dadurch gekennzeichnet, dass** die Überspannungsabschaltung (OV) monostabil arbeitet.

5. Schaltungsanordnung gemäß Anspruch 3, **dadurch gekennzeichnet, dass** die Überspannungsabschaltung (OV) monostabil und die Fehlerabschaltung (SD) bistabil arbeitet.

6. Schaltungsanordnung gemäß Anspruch 4 oder 5 **dadurch gekennzeichnet, dass** die Überspannungsabschaltung (OV) bei überschreiten einer vorgegebenen Überspannungsschwelle durch die Zwischenkreisspannung die Leistungsfaktor-Korrektur-Einrichtung (PFC) für mindestens 100 Mikrosekunden anhält.

7. Schaltungsanordnung gemäß einem der vorigen Ansprüche, **dadurch gekennzeichnet, dass** es sich bei Leistungsfaktor-Korrektur-Einrichtung (PFC) um einen selbstschwingenden Hochsetzer mit einem Hochsetzerschalter (T1), einer Hochsetzerdrossel (L1) und einer Hochsetzerdiode (D1) handelt, wobei die Spannung am Hochsetzerschalter (T1) eine Rückkoppelgröße bildet.

8. Schaltungsanordnung gemäß Anspruch 7, **dadurch gekennzeichnet, dass** der Ausgang des Wechselrichters (Out) kapazitiv mit der Rückkoppelgröße gekoppelt ist.

9. Schaltungsanordnung gemäß Anspruch 8, **dadurch gekennzeichnet, dass** es sich beim Wechselrichter (INV) um einen Halbbrückenwechselrichter mit zwei Halbbrückenschaltern (T3, T4) handelt, wobei der Verbindungspunkt der Halbbrückenschalter (T3, T4) über einen Triggerkondensator (C2) mit dem Verbindungspunkt der Hochsetzerdrossel (L1) und der Hochsetzerdiode (D1) gekoppelt ist.

10. Schaltungsanordnung gemäß Anspruch 9, **dadurch gekennzeichnet, dass** der Halbbrückenwechselrichter selbstschwingend ist.

## Claims

1. Circuit arrangement for operating discharge lamps, having the following features:
• power factor correction device (PFC) which oscillates with a PFC clock cycle and provides an intermediate circuit voltage,
• inverter (INV) which oscillates with an inverter clock cycle which is independent of the PFC clock cycle, draws its power from the intermediate circuit voltage and is capable of outputting power to discharge lamps (LP),
**characterized in that** an oscillation of the power factor correction device (PFC) is started, by means of a starting device (TRG), by an oscillation of the inverter (INV).

2. Circuit arrangement according to Claim 1, **characterized by** an overvoltage shutdown (OV) which stops the oscillation of the power factor correction device (PFC) when the intermediate circuit voltage exceeds a predetermined overvoltage threshold.

3. Circuit arrangement according to Claim 2, **characterized by** a fault shutdown (SD) which stops the oscillation of the inverter in the event of a fault.

4. Circuit arrangement according to Claim 2, **characterized in that** the overvoltage shutdown (OV) operates in a monostable manner.

5. Circuit arrangement according to Claim 3, **characterized in that** the overvoltage shutdown (OV) operates in a monostable manner and the fault shutdown operates in a bistable manner.

6. Circuit arrangement according to Claim 4 or 5, **characterized in that** the overvoltage shutdown (OV) stops the power factor correction device (PFC) for at least 100 microseconds when the intermediate circuit voltage exceeds a predetermined overvoltage threshold.

7. Circuit arrangement according to one of the preceding claims, **characterized in that** the power factor correction device (PFC) is a self-oscillating step-up converter having a step-up converter switch (T1), a step-up converter inductor (L1) and a step-up converter diode (D1), the voltage across the step-up converter switch (T1) forming a feedback variable.

8. Circuit arrangement according to Claim 7, **characterized in that** the output of the inverter (Out) is capacitively coupled to the feedback variable.

9. Circuit arrangement according to Claim 8, **characterized in that** the inverter (INV) is a half-bridge inverter having two half-bridge switches (T3, T4), the tie point of the half-bridge switches (T3, T4) being coupled to the tie point of the step-up converter inductor (L1) and the step-up converter diode (D1) via a trigger capacitor (C2).

10. Circuit arrangement according to Claim 9, **characterized in that** the half-bridge inverter is self-oscillating.

## Revendications

1. Circuit pour faire fonctionner des lampes à décharge et comportant les caractéristiques suivantes :
• un dispositif de correction de facteur de puissance (PFC) oscillant avec une fréquence PFC et fournissant une tension de circuit intermédiaire,
• un onduleur (INV) oscillant avec une fréquence d'onduleur indépendante de la fréquence PFC et pouvant tirer son énergie de la tension de circuit intermédiaire et fournir de l'énergie à des lampes à décharge (LP),
**caractérisé par le fait qu'**une oscillation du dispositif de correction de facteur de puissance (PFC) est déclenchée par l'intermédiaire d'un dispositif de démarrage (TRG) par une oscillation de l'onduleur (INV).

2. Circuit selon la revendication 1, **caractérisé par** une coupure en cas de surtension (OV) qui arrête l'oscillation du dispositif de correction de facteur de puissance (PFC) si la tension de circuit intermédiaire dépasse un seuil de surtension prescrit.

3. Circuit selon la revendication 2, **caractérisé par** une coupure en cas de défaut (SD) qui arrête l'oscillation de l'onduleur en cas de défaut.

4. Circuit selon la revendication 2, **caractérisé par le fait que** la coupure en cas de surtension (OV) travaille de façon monostable.

5. Circuit selon la revendication 3, **caractérisé par le fait que** la coupure en cas de surtension (OV) travaille de façon monostable et la coupure en cas de défaut (SD) de façon bistable.

6. Circuit selon la revendication 4 ou 5, **caractérisé par le fait que** la coupure en cas de surtension (OV) arrête l'oscillation du dispositif de correction de facteur de puissance (PFC) pendant au moins 100 microsecondes si la tension de circuit intermédiaire dépasse un seuil de surtension prescrit.

7. Circuit selon l'une des revendications précédentes, **caractérisé par le fait que** le dispositif de correction de facteur de puissance (PFC) est un circuit élévateur auto-oscillant avec un interrupteur d'élévateur (T1), avec une self d'élévateur (L1) et avec une diode d'élévateur (D1), la tension à l'interrupteur d'élévateur (T1) formant une grandeur de rétroaction.

8. Circuit selon la revendication 7, **caractérisé par le fait que** la sortie de l'onduleur (Out) est couplée de façon capacitive avec la grandeur de rétroaction.

9. Circuit selon la revendication 8, **caractérisé par le fait que** l'onduleur (INV) est un onduleur à demi-pont avec deux interrupteurs de demi-pont (T3, T4), le point de jonction des interrupteurs de demi-pont (T3, T4) étant couplé par l'intermédiaire d'un condensateur de déclenchement (C2) au point de jonction de la self d'élévateur (L1) et de la diode d'élévateur (D1).

10. Circuit selon la revendication 9, **caractérisé par le fait que** l'onduleur à demi-pont est auto-oscillant.
